# EUROPEAN PATENT APPLICATION

(11) **EP 4 510 643 A1**
(43) Date of publication of application: **19.02.2025**
(21) Application number: 23794852.6
(22) Date of filing: 17.03.2023
(51) Int. Cl.: H04W 4/029

(54) **POSITIONING REFERENCE SIGNAL SENDING METHOD AND RELATED APPARATUS, AND POSITIONING REFERENCE SIGNAL RECEIVING METHOD AND RELATED APPARATUS**

(30) Priority: 29.04.2022 CN 202210467595
(71) Applicant: Huawei Technologies Co., Ltd., Shenzhen, Guangdong 518129 (CN)
(72) Inventor: YU, Yingjie, Shenzhen, Guangdong 518129 (CN); HUANG, Su, Shenzhen, Guangdong 518129 (CN)
(74) Representative: Maiwald GmbH
(86) International application number: PCT/CN2023/082325
(87) International publication number: WO 2023/207417

(57) **Abstract**

This application provides positioning reference signal sending and receiving methods and a related apparatus. The method includes: A first terminal obtains a resource for a PRS. The first terminal sends sidelink control information SCI, where the SCI includes first indication information that indicates the resource for the PRS. The first terminal sends the PRS on the resource for the PRS. Correspondingly, a second terminal receives the SCI. The second terminal receives the PRS on the resource for the PRS indicated by the SCI. According to the foregoing PRS sending and receiving methods, positioning between terminals can be enabled without participation of a network device.

## Description

This application claims priority to Chinese Patent Application No. 202210467595.6, filed with the China National Intellectual Property Administration on April 29, 2022 and entitled "POSITIONING REFERENCE SIGNAL SENDING AND RECEIVING METHODS AND RELATED APPARATUS", which is incorporated herein by reference in its entirety.

### TECHNICAL FIELD

This application relates to the field of communication technologies, and in particular, to positioning reference signal sending and receiving methods and a related apparatus.

### BACKGROUND

In a communication technology, high-precision positioning is gradually determined as an important research project in a 5th generation mobile communication system (a 5th Generation Mobile Network or a 5th Generation Wireless System, 5G) of the 3rd generation partnership project (3rd generation partnership project, 3GPP). A positioning technology is a technology of determining a geographical location of a node, especially user equipment (user equipment, UE), in a communication network by using a specific method. A so-called positioning service is a service of positioning the geographical location of the UE by using some positioning methods. Internet of vehicles is an important application scenario of 5G, and services of the internet of vehicles relate to vehicle platooning, advanced driving, an extended sensor, remote driving, and the like. Therefore, how to implement accurate positioning of a terminal is particularly important.

Currently, a positioning service of a terminal can be completed only with participation of a network device. Specifically, in various positioning technologies that rely on the participation of the network device, uplink positioning is that the network device detects a sounding reference signal (sounding reference signal, SRS) sent by the terminal, downlink positioning is that the terminal detects a positioning reference signal (positioning reference signal, PRS) sent by the network device, and uplink and downlink positioning requires that both the terminal and the network device perform detection, to determine a location of the terminal based on the foregoing detection result.

However, for a terminal that cannot be positioned via a network device, there is currently no technology for enabling positioning between terminals.

### SUMMARY

This application provides positioning reference signal sending and receiving methods and a related apparatus, to enable positioning between terminals without participation of a network device.

According to a first aspect, a PRS sending method is provided. The method includes: A first terminal obtains a resource for a positioning reference signal (positioning reference signal, PRS). The first terminal sends sidelink control information (sidelink control information, SCI), where the SCI includes first indication information, and the first indication information indicates the resource for the PRS. The first terminal sends the PRS on the resource.

In this application, the first terminal enables a positioning service of the first terminal by including, in the SCI on a sidelink (sidelink, SL), the first indication information that indicates the resource for the PRS, and sending the PRS to another terminal (including a second terminal) on the resource indicated by the SCI. In addition, the first indication information is used, so that a probability of using a same resource for the PRS between different terminals is effectively reduced, and a positioning error caused by resource collision caused because a plurality of terminals share a same resource to receive and send the PRS when completing positioning of the plurality of terminals by using the PRS simultaneously is solved.

For example, the SCI is a message that indicates information such as a resource occupied by a terminal and modulation and coding in the sidelink, to help the terminal flexibly select a resource and modulation and coding information. The SCI may be classified into first stage SCI (first stage SCI) and second stage SCI (second stage SCI). The first stage SCI is carried on a physical sidelink control channel (physical sidelink control channel, PSCCH), and is used for transmission of information that needs to be obtained during detection, for example, resource occupation indication information, priority information, and information needed for demodulating the second stage SCI. The second stage SCI indicates additional information needed for physical sidelink shared channel (physical sidelink shared channel, PSSCH) demodulation.

It may be understood that the first indication information of the resource for the PRS in this application may be included in the first stage SCI, or may be included in the second stage SCI. This is not limited in this application.

With reference to the first aspect, in some implementations of the first aspect, the SCI includes first-type SCI and second-type SCI, a resource for the first-type SCI is predefined, the first-type SCI includes second indication information, the second indication information is related to a resource for the second-type SCI, and the second-type SCI includes the first indication information.

In this application, the second indication information is added to the SCI to indicate a specific resource, and the first indication information that indicates the resource for the PRS is sent on the indicated specific resource. In this way, in this method, a reserved bit in the existing SCI can be effectively used, and the resource for the PRS can be indirectly indicated in a plurality of manners.

It may be understood that the first-type SCI may be the first stage SCI, or may be the second stage SCI. This is not limited in this application.

With reference to the first aspect, in some implementations of the first aspect, that the second indication information is related to a resource for the second-type SCI includes: The second indication information indicates the resource for the second-type SCI.

With reference to the first aspect, in some implementations of the first aspect, the resource for the second-type SCI is a predefined first resource, and that the second indication information is related to a resource for the second-type SCI includes: The second indication information indicates whether to send the second-type SCI on the first resource.

It may be understood that the second indication information may be indicated by using the reserved bit in the SCI.

The second indication information is represented by using the reserved bit in the existing SCI, so that an indication of the second-type SCI can be completed without changing an SCI function in an existing standard. This implements backward compatibility of the standard.

With reference to the first aspect, in some implementations of the first aspect, the first indication information indicates one or more of the following: whether the resource for the PRS occupies a physical sidelink control channel PSCCH or a physical sidelink shared channel PSSCH, whether the resource is a PRS-dedicated resource, and location information of the resource for the PRS.

With reference to the first aspect, in some implementations of the first aspect, that an indication indicated by the first indication information for the location information of the resource for the PRS includes: at least one of a time domain position and a frequency domain position of the resource for the PRS; or a number or an index of the resource for the PRS, where the number or the index of the resource for the PRS is determined based on a predefined mapping relationship between at least one resource and at least one number or index.

For example, a frequency domain indication may include one or more of the following: a quantity of occupied sub-channels, whether an entire sidelink bandwidth part (bandwidth part, BWP) is occupied, a comb (comb) configuration, or a resource element (resource element, RE) offset.

For example, a time domain indication may include one or more of the following: whether a quantity of offset symbols or occupied symbols based on a sidelink start symbol (start SL symbol) in each slot (slot) in a resource pool occupy an entire slot.

With reference to the first aspect, in some implementations of the first aspect, that a first terminal obtains a resource for a PRS includes: The first terminal receives information about the resource for the PRS configured by a network device; and the first terminal obtains the resource for the PRS from a predefined resource pool; or the first terminal determines a predefined resource as the resource for the PRS.

With reference to the first aspect, in some implementations of the first aspect, the first terminal receives a measurement result from a second terminal, where the measurement result is obtained by the second terminal based on measurement of the PRS sent by the first terminal; and the first terminal performs positioning based on the measurement result.

In this application, the terminal requests another terminal to perform positioning by sending the PRS. The another terminal receives the PRS, measures the PRS, and sends the obtained measurement result to the first terminal. The first terminal performs positioning based on the measurement result, to implement positioning between terminals.

According to a second aspect, a PRS receiving method is provided, including: A second terminal receives sidelink control information SCI, where the SCI includes first indication information, and the first indication information indicates a resource for a PRS. The second terminal receives the PRS on the resource for the PRS.

In this application, a first terminal enables a positioning service of the first terminal by including, in the SCI on a sidelink (sidelink, SL), the first indication information that indicates the resource for the PRS, and sending the PRS to another terminal (including the second terminal) on the resource indicated by the SCI. In addition, the first indication information is used, so that a probability of using a same resource for the PRS between different terminals is effectively reduced, and a positioning error caused by resource collision caused because a plurality of terminals share a same resource to receive and send the PRS when completing positioning of the plurality of terminals by using the PRS simultaneously is solved.

With reference to the second aspect, in some implementations of the second aspect, the SCI includes first-type SCI and second-type SCI, a resource for the first-type SCI is predefined, the first-type SCI includes second indication information, the second indication information is related to a resource for the second-type SCI, and the second-type SCI includes the first indication information.

With reference to the second aspect, in some implementations of the second aspect, that the second indication information is related to a resource for the second-type SCI includes: The second indication information indicates the resource for the second-type SCI.

With reference to the second aspect, in some implementations of the second aspect, the resource for the second-type SCI is a predefined first resource, and that the second indication information is related to a resource for the second-type SCI includes: The second indication information indicates whether to send the second-type SCI on the first resource.

With reference to the second aspect, in some implementations of the second aspect, the first indication information indicates one or more of the following: whether the resource for the PRS occupies a physical sidelink control channel PSCCH or a physical sidelink shared channel PSSCH, whether the resource for the PRS is a PRS-dedicated resource, and location information of the resource for the PRS.

With reference to the second aspect, in some implementations of the second aspect, an indication indicated by the first indication information for the location information of the resource for the PRS includes: at least one of a time domain position and a frequency domain position of the resource for the PRS; or a number or an index of the resource for the PRS, where the number or the index of the resource for the PRS is determined based on a predefined mapping relationship between at least one resource and at least one number.

With reference to the second aspect, in some implementations of the second aspect, the method further includes: The second terminal performs measurement based on the PRS sent by the first terminal to obtain a measurement result. The second terminal sends the measurement result.

With reference to the second aspect, in some implementations of the second aspect, the method further includes: The second terminal performs measurement based on the PRS sent by the first terminal to obtain a measurement result. The second terminal performs positioning based on the measurement result.

According to a third aspect, a PRS sending apparatus is provided, configured to perform the method in any one of the possible implementations of the first aspect. Specifically, the apparatus includes a module configured to perform the method in any one of the possible implementations of any one of the foregoing aspects.

In a design, the apparatus may include a module that is in one-to-one correspondence with the method/operation/step/action described in the first aspect. The module may be implemented by a hardware circuit, software, or a combination of the hardware circuit and software.

In another design, the apparatus is a communication chip. The communication chip may include an input circuit or an interface configured to send information or data, and an output circuit or an interface configured to receive information or data.

In another design, the apparatus is a communication device. The communication device may include a transmitter configured to send information or data and a receiver configured to receive information or data.

In another design, the apparatus is configured to perform the method in any possible implementation of the first aspect. The apparatus may be configured in a terminal, or the apparatus is the foregoing first terminal.

According to a fourth aspect, a PRS receiving apparatus is provided, configured to perform the method in any one of the possible implementations of the second aspect. Specifically, the apparatus includes a module configured to perform the method in any one of the possible implementations of the second aspect.

In a design, the apparatus may include a module that is in one-to-one correspondence with the method/operation/step/action described in the second aspect. The module may be implemented by a hardware circuit, software, or a combination of the hardware circuit and software.

In another design, the apparatus is a communication chip. The communication chip may include an input circuit or an interface configured to send information or data, and an output circuit or an interface configured to receive information or data.

In another design, the apparatus is a communication device. The communication device may include a transmitter configured to send information or data and a receiver configured to receive information or data.

In another design, the apparatus is configured to perform the method in any possible implementation of the second aspect. The apparatus may be configured in a terminal, or the apparatus is the foregoing second terminal.

According to a fifth aspect, a processor is provided, including an input circuit, an output circuit, and a processing circuit. The processing circuit is configured to receive a signal by using the input circuit, and transmit the signal by using the output circuit, so that the processor performs the method in any one of the possible implementations of the first aspect.

Optionally, there are one or more processors, and there are one or more memories.

Optionally, the memory and the processor may be integrated together, or the memory and the processor may be separately disposed.

Optionally, the apparatus further includes a transmitter (transmitter) and a receiver (receiver). The transmitter and the receiver may be separately disposed, or may be integrated together to obtain a transceiver (transceiver).

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

The processor in the fifth aspect may be a chip, and the processor may be implemented by hardware or software. When implemented by hardware, the processor may be a logic circuit, an integrated circuit, or the like; or when implemented by software, the processor may be a general-purpose processor, and is implemented by reading software code stored in the memory. The memory may be integrated in the processor, or located outside the processor and exist separately.

According to a sixth aspect, a computer program product is provided. The computer program product includes a computer program (which may also be referred to as code or instructions). When the computer program runs, a computer is enabled to perform the method in any one of the possible implementations of any one of the foregoing aspects.

According to a seventh aspect, a computer-readable storage medium is provided. The computer-readable storage medium stores a computer program (which may also be referred to as code or instructions). When the computer program runs on a computer, the computer is enabled to perform the method in any one of the possible implementations of any one of the foregoing aspects.

According to an eighth aspect, a chip system is provided. The chip system includes a processor, configured to implement the method in the first aspect or any one of the possible implementations of the first aspect, or configured to implement the method in any one of the possible implementations of any one of the foregoing aspects.

In a possible design, the chip system further includes a memory, and the memory is configured to store program instructions. The chip system may include a chip, or may include a chip and another discrete component.

### BRIEF DESCRIPTION OF DRAWINGS

FIG. 1 is a diagram of a communication system according to an embodiment of this application;
FIG. 2 is a schematic flowchart of a PRS sending and receiving method according to an embodiment of this application;
FIG. 3 is a schematic flowchart of a positioning method in Scenario 1 according to an embodiment of this application;
FIG. 4 is a schematic flowchart of a positioning method in Scenario 2 according to an embodiment of this application;
FIG. 5 is a block diagram of a PRS sending and receiving apparatus according to an embodiment of this application; and
FIG. 6 is a block diagram of another PRS sending and receiving apparatus according to an embodiment of this application.

### DESCRIPTION OF EMBODIMENTS

The following describes technical solutions of this application with reference to accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile communications system (universal mobile telecommunications system, UMTS), a 5th generation (5th generation, 5G) mobile communication system, a new radio (new radio, NR) system, or another evolved communication system, and a next-generation mobile communication system of the 5G communication system.

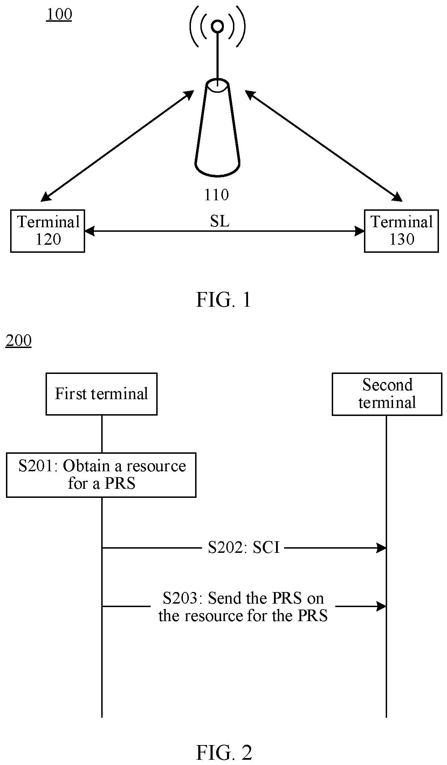

For ease of understanding embodiments of this application, a communication system applicable to embodiments of this application is first described in detail with reference to FIG. 1.

FIG. 1 is a diagram of an architecture of a communication system 100 according to this application. As shown in FIG. 1, the communication system includes a network device 110, a terminal 120, and a terminal 130. Optionally, the network device 110 may communicate with the terminal 120, the network device 110 may communicate with the terminal 130, and the terminal 120 may also communicate with the terminal 130.

Specific forms of the network device 110, the terminal 120, and the terminal 130 shown in FIG. 1 are not limited in embodiments of this application.

The terminal in embodiments of this application may alternatively be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal is a device that provides a user with voice and/or data connectivity, for example, a handheld device or a vehicle-mounted device having a wireless connection function. Currently, examples of some terminals are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, an personal digital assistant (personal digital assistant, PDA), a handheld device or a computing device that has a wireless communication function, or another processing device connected to a wireless modem, a vehicle-mounted device, a wearable device, a terminal in a 5G network, a terminal in a future evolved public land mobile communication network (public land mobile network, PLMN), or the like. This is not limited in this application.

By way of example but not limitation, in this application, the terminal may be a terminal in an internet of things (internet of things, IoT) system. The internet of things is an important part of future information technology development. A main technical feature of the internet of things is to connect articles and networks through a communication technology, to implement an intelligent network of human-machine interconnection and interconnection of things. For example, the terminal in embodiments of this application may be a wearable device. The wearable device may also be referred to as a wearable intelligent device, and is a general term of a wearable device that is intelligently designed and developed for daily wear by using a wearable technology, for example, glasses, gloves, watches, clothes, and shoes. The wearable device is a portable device that can be directly worn on a body or integrated into clothes or accessories of a user. The wearable device is not only a hardware device, and can implement powerful functions through software support, a data exchange, and cloud interaction. In a broad sense, the wearable intelligent device includes full-featured and large-size devices that can implement complete or partial functions without depending on smartphones, for example, smart watches or smart glasses, and devices that dedicated to only one type of application function and need to be used together with other devices such as smartphones, such as various smart bands or smart jewelry used for monitoring physical signs.

By way of example but not limitation, in embodiments of this application, the terminal may alternatively be a terminal in machine type communication (machine type communication, MTC). In addition, the terminal may alternatively be a vehicle-mounted module, a vehicle-mounted assembly, a vehicle-mounted component, a vehicle-mounted chip, a vehicle-mounted unit, or the like that is disposed in the vehicle as one or more components or units. The vehicle may implement the method provided in this application through the vehicle-mounted module, the vehicle-mounted assembly, the vehicle-mounted component, the vehicle-mounted chip, the vehicle-mounted unit, or the like. Therefore, embodiments of this application may also be applied to an internet of vehicles, for example, vehicle to everything (vehicle to everything, V2X), a long term evolution-vehicle (long term evolution-vehicle, LTE-V), or a vehicle-to-vehicle (vehicle-to-vehicle, V2V) technology.

A network device in this application may be a device communicating with a terminal. The network device may alternatively be referred to as an access network device or a radio access network device. The network device may be a transmission reception point (transmission reception point, TRP), or may be an evolved NodeB (evolved NodeB, eNB, or eNodeB) in an LTE system, or may be a home NodeB (for example, a home evolved NodeB, or a home NodeB, HNB), a baseband unit (baseband unit, BBU), or a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, or may be an access point (access point, AP) in a WLAN, or may be a gNB in an NR system. Alternatively, the network device may be a city base station, a micro base station, a pico base station, a femto base station, or the like. This is not limited in this application.

In a network structure, the network device may include a central unit (central unit, CU) node, a distributed unit (distributed unit, DU) node, a radio access network (radio access network, RAN) device including a CU node and a DU node, or a RAN device including a control plane CU node (CU-CP node), a user plane CU node (CU-UP node), and a DU node.

The network device provides a service for a cell, and the terminal communicates with the cell through a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

It may be understood that FIG. 1 is merely a simplified diagram for ease of understanding. The communication system 100 may further include another device that is not shown in FIG. 1.

Optionally, all the terminals shown in FIG. 1 may be within coverage of the network device 110, or none of the terminals is within coverage of the network device 101; or some terminals may be within coverage of the network device 110, and some terminals are not within coverage of the network device 110. This is not limited in this application.

For the communication system shown in FIG. 1, there is a first communication interface between the network device 110 and the terminal 120, there is a first communication interface between the network device 110 and the terminal 130, and there is a second communication interface between the terminal 120 and the terminal 130.

For example, the first communication interface may be a user to network interface universal (user to network interface universal, Uu), and the second communication interface may be a proximity service communication 5 (pose communication 5, PC5) interface.

A first communication scenario includes communication between a terminal and a network device, for example, communication between the terminal 120 and the network device 110. Specifically, the communication between the terminal 120 and the network device 110 is referred to as uplink and downlink communication. For example, the terminal 120 may send information to the network device 110 over an uplink, and the network device 110 may send information to the terminal 120 over a downlink.

A second communication scenario includes communication between terminals, for example, communication between the terminal 120 and the terminal 130. Generally, a link for the communication between the terminal 120 and the terminal 130 is referred to as a sidelink, and the terminal 120 and the terminal 130 may perform data transmission on the sidelink (sidelink, SL).

It should be noted herein that a specific communication scenario between terminals is not limited in embodiments of this application. For example, in a possible scenario, both the terminal 120 and the terminal 130 in FIG. 1 may be vehicle-mounted devices (or may be vehicles or internet of vehicles terminals). In another possible scenario, the terminal 120 in FIG. 1 may be a vehicle-mounted device (or may be a vehicle or an internet of vehicles terminal), and the terminal 130 may be a road side unit (road side unit, RSU).

Currently, for the communication system shown in FIG. 1, positioning of a terminal needs participation of a network device, in other words, a positioning technology needs to be implemented through a Uu interface, and may include uplink positioning, downlink positioning, and uplink and downlink positioning. For example, the uplink positioning may be that the network device measures an SRS sent by the terminal. The downlink positioning may be that the terminal measures a PRS sent by the network device. The uplink and downlink positioning requires that the terminal measure a PRS sent by the network device, and the network device measure an SRS sent by the terminal. The network device and/or the terminal determine/determines a location of the terminal based on a measurement result, to implement a positioning service of the terminal.

For example, a downlink positioning technology includes a downlink-time difference of arrival (downlink-time difference of arrival, DL-TDOA) positioning method and a downlink-angle of arrival (downlink-angle of arrival, DL-AOD) positioning method, an uplink and downlink positioning technology includes a multiple cell-round trip time (multiple cell-round trip time, Multi-RTT) positioning method, and an uplink positioning technology includes an uplink-time difference of arrival (uplink-time difference of arrival, UL-TDOA) positioning method and an (uplink-angle of departure, UL-AOA) positioning method.

Further, in a DL-TDOA positioning technology, at least three network devices are needed. The terminal separately measures PRSs sent by the three network devices, to obtain time of arrival of the three signals, selects one of the network devices as a reference network device, and subtracts time of arrival corresponding to other network devices from time of arrival of the reference network device, to obtain two TDOAs. A corresponding distance difference is calculated based on each time difference. Each distance difference may form a hyperbola that uses two corresponding network devices as focuses, and the location of the terminal may be estimated by using an intersection point of two hyperbolas.

In a DL-AOD positioning technology, at least two network devices are needed. The terminal separately measures PRSs sent by the two network devices, and each network device obtains a group of beam-level reference signal received power (reference signal received power, RSRP) values through measurement, where the beam-level reference signal received power value is referred to as a measurement value. After the terminal reports the measurement value to a location management unit (location management function, LMF), the LMF may obtain, through calculation with reference to a transmit beam directivity pattern of each network device, an AOD corresponding to the network device. The transmit beam directivity pattern of the network device is sent by the network device to the LMF (or the transmit beam directivity pattern is stored in the LMF). Alternatively, the LMF sends, to the network device, the beam-level RSRP value corresponding to the network device, and the network device obtains an AOD through calculation and then reports the AOD to the LMF. Therefore, the LMF can form, based on a location and the AOD of each network device, a ray whose start point is the location of the network device and whose deflection angle is the AOD, and an intersection point of rays generated by two network devices is the location of the terminal.

In a Multi-RTT positioning technology, at least two network devices are needed. The network device measures a signal sent by the terminal, and the terminal also needs to measure a signal sent by the network device. Time at which the network device sends the signal is denoted as T1, time at which the terminal receives the signal is denoted as T2, time at which the terminal sends the signal is denoted as T3, and time at which the network device receives the signal is denoted as T4. The network device reports a measured signal receiving-sending time difference (TB=T4-T1) to the LMF, and the terminal also reports a measured signal receiving-sending time difference (TUE=T2-T3) to the LMF. The LMF determines round-trip time of signal propagation based on two received time differences TB and TUE, where RTT=TB+TUE. During positioning calculation, the LMF draws a circle by using a distance corresponding to a measured RTT value as a radius and each network device as a center of the circle, and determines an intersection point of obtained circles as the location of the terminal.

A difference between a UL-TDOA positioning technology and the DL-TDOA positioning technology lies only in that measurement entities are different. A measurement entity of the DL-TDOA positioning technology is the terminal, and a measurement entity of the UL-TDOA positioning technology is the network device. Similarly, a difference between the DL-AOD positioning technology and a UL-AOA positioning technology lies only in that measurement entities are different. A measurement entity of the DL-AOD positioning technology is the terminal, and a measurement entity of the UL-AOA positioning technology is the network device.

In conclusion, the positioning service of the terminal can be implemented only with the participation of the network device. For some terminals (for example, in the field of internet of vehicles, autonomous technologies, or the like) that are not within coverage of the network device, the positioning service cannot be completed between terminals. Therefore, a sidelink (sidelink) based terminal positioning technology urgently needs to be provided, to implement positioning of a terminal without participation of a network device.

In view of this, this application provides a PRS sending and receiving method and apparatus. A terminal obtains a resource for a PRS, and indicates the resource for the PRS in SCI, and then the terminal may send the PRS on a sidelink. According to the method positioning can be enabled between terminals without participation of a network device.

Before the PRS sending and receiving method provided in this application is described, the following descriptions are first provided.

First, in embodiments shown in this specification, terms and abbreviations, for example, SCI, PRS or SL, are examples provided for ease of description, and should not be construed as any limitation on this application. This application does not exclude a possibility of defining another term that can implement a same or similar function in an existing or a future protocol.

Second, the terms "first", "second", and various numbers in the following embodiments are merely used for differentiation for ease of description, but are not intended to limit the scope of embodiments of this application. For example, different SCI is distinguished. It should be noted that ordinal numbers such as "first" and "second" used in embodiments of this application are used to distinguish between a plurality of objects, and are not intended to limit a sequence, a time sequence, priorities, or importance of the plurality of objects.

Third, "protocol" involved in embodiments of this application may be a standard protocol in a communication field, for example, may include an LTE protocol, an NR protocol, and a related protocol applied to a future communication system. This is not limited in this application.

Fourth, "a plurality of" means two or more than two. "And/or" describes an association relationship between associated objects, and represents that three relationships may exist. For example, A and/or B may represent the following cases: A exists alone, both A and B exist, and B exists alone, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

It should be noted that in the descriptions of this application, "predefined" may refer to being defined in a communication protocol and configured in an access network device and a terminal device in communication, or may refer to being determined and configured by an access network device for a terminal device, where the configuration may be performed explicitly by using signaling or may be performed implicitly by using other information.

In the descriptions of this application, the "indication" may include a direct indication and an indirect indication, or may include an explicit indication and an implicit indication. Information indicated by a piece of information (such as first indication information or second indication information described below) is referred to as to-be-indicated information. In a specific implementation process, there are a plurality of manners of indicating the to-be-indicated information. For example, the to-be-indicated information may be directly indicated, where the to-be-indicated information, an index of the to-be-indicated information, or the like is indicated. For another example, the to-be-indicated information may be indirectly indicated by indicating other information. There is an association relationship between the other information and the to-be-indicated information. For another example, only a part of the to-be-indicated information may be indicated, and the other part of the to-be-indicated information is known, agreed in advance, or can be deduced. In addition, specific information may also be indicated by using a pre-agreed (for example, specified in a protocol) arrangement sequence of various pieces of information, to reduce indication overheads to some extent.

The following describes in detail a PRS sending and receiving method 200 according to an embodiment of this application with reference to FIG. 2. The methods 200 may be applied to the communication scenario 100 shown in FIG. 1. However, this embodiment of this application is not limited thereto. It should be understood that a first terminal in this embodiment of this application may be the terminal 120 or the terminal 130 in FIG. 1, and a second terminal may be the terminal 120 or the terminal 130 in FIG. 1. When the first terminal is the terminal 120, the second terminal may be the terminal 130 or another terminal. When the first terminal is the terminal 130, the second terminal may be the terminal 120 or another terminal. This is not limited in this application.

FIG. 2 is a schematic flowchart of a PRS sending and receiving method 200 according to an embodiment of this application. As shown in FIG. 2, the methods 200 may include S201 to S203. The following describes steps in the methods 200 in detail.

S201: The first terminal obtains a resource for a PRS.

For example, a manner in which the first terminal obtains the resource for the PRS may include: The first terminal receives information about the resource for the PRS configured by a network device; and the first terminal determines the resource for the PRS from a predefined resource pool; or the first terminal determines a predefined resource as the resource for the PRS. It should be noted that, the resource for the PRS is a resource used by the first terminal to send the PRS, and the resource may be a time domain resource, a frequency domain resource, or a time-frequency resource. It should be understood that, "predefined" may refer to being defined in a communication protocol and configured in a network device and a terminal device in communication, or may refer to being determined and configured by a network device for a terminal device, where the configuration may be performed explicitly by using signaling or may be performed implicitly by using other information.

It may be understood that, before obtaining the resource for the PRS, the first terminal may obtain a resource occupation status by using a detection mechanism, and then determine an available resource for the PRS from the predefined resource pool. The resource pool is a set of a plurality of resources.

The PRS in this embodiment of this application is a reference signal for enabling positioning between terminals. It should be understood that the reference signal for positioning may alternatively have another name. This is not limited in this application.

S202: The first terminal sends SCI, where the SCI includes first indication information that indicates the resource for the PRS. Correspondingly, the second terminal receives the SCI.

It should be noted that the SCI may be sent in a broadcast manner or in a multicast manner. This is not limited in this application.

The SCI in this embodiment of this application may be classified into first stage SCI and second stage SCI. The first stage SCI is carried on a PSCCH, and is used for transmission of information that needs to be obtained when another terminal (for example, the second terminal) performs detection, for example, resource occupation indication information, priority information, and information needed for demodulating the second stage SCI. The second stage SCI indicates additional information needed for PSSCH demodulation.

S203: The first terminal sends the PRS on the resource for the PRS. Correspondingly, the second terminal receives the PRS on the resource for the PRS.

It may be understood that, after obtaining the resource for the PRS, the first terminal performs resource indication by sending the SCI including the first indication information, and sends the PRS on the indicated resource for the PRS. In other words, after obtaining the resource for the PRS, the first terminal sends the SCI including the first indication information, so that another terminal (including the second terminal) that receives the SCI can determine that the resource indicated by the first indication information is to be occupied, and the another terminal (including the second terminal) does not send the PRS on the resource. Alternatively, after obtaining the resource for the PRS, the first terminal sends the PRS to another terminal, and includes, in the SCI sent to the another terminal (including the second terminal), the first indication information that indicates the resource occupied by the PRS, so that the another terminal (including the second terminal) that receives the SCI obtains the first indication information through detection, determines that the resource is occupied, and does not send the PRS on the resource.

In this embodiment of this application, the first terminal enables a positioning service of the first terminal by including, in the SCI on a sidelink, the first indication information that indicates the resource for the PRS, and sending the PRS to the another terminal (including the second terminal) on the resource indicated by the SCI. In addition, the first indication information is used, so that a probability of using a same resource for the PRS between different terminals is effectively reduced, and a positioning error problem caused by resource collision caused because a plurality of terminals share a same resource to receive and send the PRS when completing positioning of the plurality of terminals by using the PRS simultaneously is solved.

It may be understood that the first indication information in this embodiment of this application may be included in the first stage SCI, or may be included in the second stage SCI. This is not limited in this application.

The first indication information may be directly included in the SCI, or may be indirectly included in the SCI by using second indication information.

In a possible implementation, the first indication information is directly included in the SCI. In this case, a bit may be reserved in the existing SCI to represent the first indication information. The first indication information may be in a form of a digit, a bitmap (bitmap), a character string, or the like. The form of the first indication information is not specifically limited in this embodiment of this application.

The first indication information may include one or more of the following.
1. A resource index (or number), indicating a number or an index of the resource for the PRS, where the resource for the PRS includes at least one of occupied time domain resource and frequency domain resource. Generally, a set of resources for the PRS corresponds to one number or index, and a correspondence between the resource and the number or index may be preset, default, or set in another manner.
   It may be understood that, when the resource number or index exists, it indicates that the first terminal occupies the resource for the PRS. When the resource number or index does not exist, it indicates that the first terminal does not occupy the resource for the PRS.
2. A positioning signal transmission indication, indicating whether to send the PRS.

It may be understood that, when the positioning signal transmission indication exists, but the resource number or index does not exist, it indicates that the first terminal sends the PRS on a preset resource.

The resource for the PRS sent by the first terminal may be the resource for the PRS obtained in S201. For example, 3 to 5 bits reserved in SCI described in the 3rd generation partnership project (generation partnership project, 3GPP) standard document TS 38.214 specification release v16.7.0 may indicate the first indication information. For example, the first indication information may be indicated by using two bits. For example, 01 indicates that the resource number or index does not exist, and the positioning reference signal transmission indication exists; 10 indicates that the resource number or index exists, and the positioning reference signal transmission indication does not exist; and 11 indicates that the resource number or index and the positioning reference signal transmission indication exist. The foregoing manner of indicating the first indication information by using two bits is merely an example. A specific indication manner of the first indication information is not limited in this embodiment of this application.

In this embodiment of this application, the first indication information is indicated by using the reserved bit in the existing SCI, so that an indication of the PRS can be completed without changing an SCI function in an existing standard. This implements backward compatibility of the standard.

In another possible implementation, the first indication information is indirectly included in the SCI by using the second indication information (that is, dedicated SCI may be added to the SCI, to indicate the resource for the PRS). In this case, the SCI includes first-type SCI and second-type SCI. A resource for the first-type SCI is predefined, the first-type SCI includes the second indication information, the second indication information is related to a resource for the second-type SCI, and the second-type SCI includes the first indication information. It may be understood that the second-type SCI is the dedicated SCI added to the SCI in a conventional technology.

It may be understood that the first-type SCI may be the first stage SCI, or may be the second stage SCI. This is not limited in this embodiment of this application. The first-type SCI and the second-type SCI are information used by the first terminal to indicate information such as a time domain resource, a frequency domain resource, or a time-frequency resource occupied by the first terminal, modulation and coding, and the like (including indicating the resource for the PRS) in sidelink communication, to help the another terminal (for example, the second terminal) flexibly select a resource and modulation and coding information.

That the second indication information is related to a resource for the second-type SCI may include the following two cases.

Case 1: The second indication information indicates the resource for the second-type SCI.

For example, in this application, to reduce transmission overheads, the second indication information may be a number or an index corresponding to the resource for the second-type SCI, and the number or the index indicated by the second indication information may indicate a resource occupation status of the second-type SCI. Alternatively, the second indication information directly indicates at least one of time domain resource and frequency domain resource occupied by the second-type SCI.

The foregoing second-type SCI may be carried on a PSSCH or a PSCCH. In other words, the second-type SCI may be the first stage SCI, or may be the second stage SCI. This is not limited in this embodiment of this application.

Case 2: The resource for the second-type SCI is a predefined first resource, and that the second indication information is related to a resource for the second-type SCI includes: The second indication information indicates whether to send the second-type SCI on the first resource.

It may be understood that the second indication information may be indicated by using the reserved bit in the SCI.

For example, the second indication information may indicate, by using a bit value of one bit, whether to send the second-type SCI on the first resource. When the bit value is 1, it indicates to send the second-type SCI on the first resource; when the bit value is 0, it indicates not to send the second-type SCI on the first resource. Alternatively, when the bit value is 0, it indicates to send the second-type SCI on the first resource; when the bit value is 1, it indicates not to send the second-type SCI on the first resource. In other words, the second indication information may indicate, by using the bit value of the reserved one bit, whether to send the second-type SCI.

In this implementation, the second indication information is added to the SCI to indicate a specific resource, and the first indication information that indicates the resource for the PRS is sent on the indicated specific resource. According to the method, the reserved bit in the existing SCI can be effectively used, and the resource for the PRS can be indirectly indicated in a plurality of manners.

For example, the foregoing plurality of manners may be that the resource occupied by the PRS is indicated, on the resource indicated by the second indication information, by using the number or index of the resource for the PRS; or the resource occupied by the PRS is indicated, on an indicated resource block, by using a bitmap, for example, a symbol-level indication bitmap is 00110000000000, indicating that the resource for the PRS occupies two symbols and is located on a 3^{rd} symbol and a 4^{th} symbol in one slot.

When the dedicated SCI is added to the SCI to indicate the resource for the PRS, the first indication information indicates one or more of the following: whether the resource for the PRS occupies the PSCCH or the PSSCH, whether the resource is a PRS-dedicated resource, or the resource for the PRS.

It should be understood that the dedicated resource indicates that the resource is only for sending the PRS.

In an optional embodiment, that an indication indicated by the first indication information for the resource for the PRS includes: at least one of a time domain position and a frequency domain position of the resource for the PRS; or a number or an index of the resource for the PRS, where the number or index of the resource for the PRS is determined based on a predefined mapping relationship between at least one resource and at least one number or index.

For example, a frequency domain indication may include one or more of the following: a quantity of occupied sub-channels, whether an entire sidelink bandwidth part (bandwidth part, BWP) is occupied, a comb (comb) configuration, or an RE offset.

It may be understood that, when the frequency domain indication does not include the quantity of occupied sub-channels, it indicates that an entire resource pool or the entire BWP is occupied, or a start point and an occupied quantity are default. When the frequency domain indication does not include the comb configuration, it indicates a default value, for example, comb1 comb4, or the like. When the frequency domain indication does not include the RE offset, it indicates a default value, for example, the RE offset is 0, 1, or 2.

For example, a time domain indication may include one or more of the following: whether a quantity of offset symbols or occupied symbols based on a sidelink start symbol in each slot (slot) in a resource pool occupy an entire slot.

It may be understood that when the time domain indication does not include the quantity of offset symbols, it indicates a default value, for example, zero offset symbols. When the time domain indication does not include the quantity of occupied symbols, it indicates a default value, for example, one symbol.

In an optional embodiment, the methods 200 further include: The second terminal performs measurement based on the PRS to obtain a measurement result, and sends the measurement result to the first terminal. Correspondingly, the first terminal receives the measurement result, and performs positioning based on the measurement result.

In this embodiment of this application, the terminal requests another terminal to perform positioning by sending the PRS. The another terminal receives the PRS, measures the PRS, and sends the obtained measurement result to the first terminal. The first terminal performs positioning based on the measurement result, to implement positioning between terminals.

In an optional embodiment, the methods 200 further include: The second terminal performs measurement based on the PRS to obtain a measurement result, and performs positioning based on the measurement result.

In this embodiment of this application, the terminal measures the received PRS, and performs positioning based on the measurement result, to implement positioning between terminals.

It may be understood that, for the foregoing process of performing positioning based on the measurement result, refer to the uplink positioning technology and the downlink positioning technology that are shown above. A difference from the foregoing positioning technology lies in that all embodiments of this application are performed by terminals.

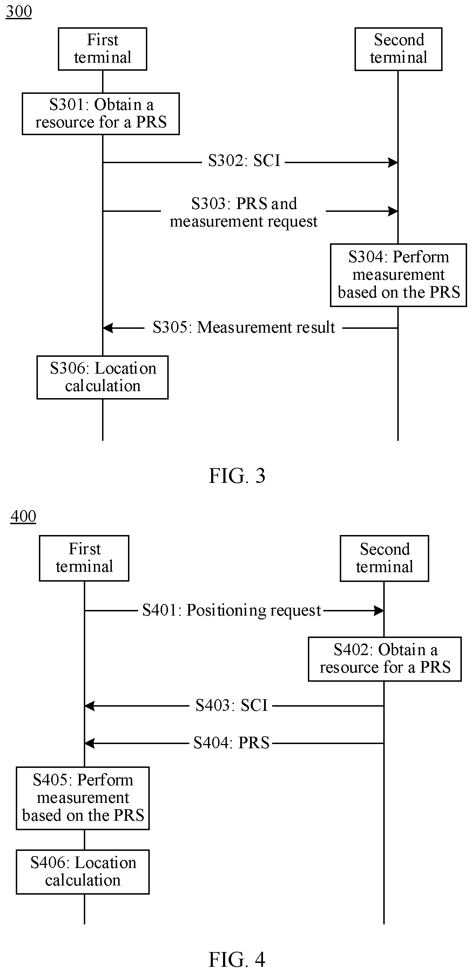

The following uses two scenarios as an example to describe in detail the PRS sending and receiving method provided in embodiments of this application with reference to FIG. 3 and FIG. 4.

Scenario 1: A to-be-positioned terminal (a terminal that needs a location service) sends a PRS, and requests another terminal to assist in measurement to complete positioning.

FIG. 3 shows a positioning method 300 in Scenario 1 according to an embodiment of this application. As shown in FIG. 3, the to-be-positioned terminal is a first terminal, and another terminal is a second terminal. The method 300 may include S301 to S306. The following describes steps in the method 300 in detail.

S301: The first terminal obtains a resource for a PRS.

For the foregoing process of obtaining the resource for the PRS, refer to related descriptions of S201 in the foregoing methods 200. Details are not described herein again.

It may be understood that, after obtaining the resource for the PRS, the first terminal detects whether there is related information that indicates the PRS in SCI sent by the another terminal, and determines whether the resource is occupied. If the resource for the PRS is occupied, the first terminal re-obtains an unoccupied resource for the PRS. Alternatively, the first terminal determines a resource occupation status by using a detection mechanism, and then obtains the resource for the PRS from an unoccupied resource pool.

S302: The first terminal sends the SCI. Correspondingly, the second terminal receives the SCI.

The SCI includes indication information that indicates the resource for the PRS.

For the indication information, refer to related descriptions of the first indication information. Details are not described herein again.

S303: The first terminal sends a measurement request message and the PRS. Correspondingly, the second terminal receives the measurement request message and the PRS.

The measurement request message includes a needed measurement amount, for example, one or more of time of arrival of the request, an angle of arrival, and an angle of departure.

It should be noted that the foregoing measurement request is sent in a unicast, multicast, or broadcast manner, and the PRS is sent in a broadcast or multicast manner. This is not limited in this embodiment of this application.

S304: The second terminal performs measurement based on the PRS.

For example, the second terminal may measure the PRS based on the measurement amount included in the received measurement request message, to obtain a measurement result.

S305: The second terminal sends the measurement result to the first terminal. Correspondingly, the first terminal receives the measurement result.

S306: The first terminal performs location calculation based on the measurement result.

In this embodiment of this application, the first terminal sends the PRS and a positioning request on a sidelink, and the first terminal includes the indication information that indicates the resource for the PRS in the SCI, and sends the information in a broadcast manner, so that a terminal that receives and can decode the SCI can determine an occupation status of the resource for the PRS, to avoid a case in which the another terminal (including the second terminal) sends the PRS by using the same resource again. In addition, the first terminal determines a location of the first terminal by receiving the sent measurement result. According to the method 300, a positioning service between terminals is implemented without participation of a network device. In addition, the first indication information is used, so that a measurement error caused by collision of the resource for the PRS is effectively reduced, and accuracy of location measurement is improved.

Scenario 2: A to-be-positioned terminal (a terminal that needs a location service) requests a neighboring terminal to send a PRS, and performs measurement based on the received PRS to complete positioning.

FIG. 4 shows a positioning method 400 in Scenario 2 according to an embodiment of this application. As shown in FIG. 4, the to-be-positioned terminal is a first terminal, and the neighboring terminal is a second terminal. The method 400 may include S401 to S406. The following describes steps in the method 400 in detail.

S401: The first terminal sends a positioning request. Correspondingly, the second terminal receives the positioning request.

The positioning request is used to request another terminal to send a PRS.

It may be understood that the positioning request may be sent in a broadcast, unicast, or multicast manner. This is not limited in this embodiment of this application.

S402: The second terminal obtains a resource for the PRS.

For the foregoing process of obtaining the resource for the PRS, refer to related descriptions of S201 in the foregoing methods 200. Details are not described herein again.

It may be understood that, after obtaining the resource for the PRS, the second terminal detects whether there is related information that indicates the PRS in SCI sent by the another terminal, and determines whether the resource is occupied. If the resource for the PRS is occupied, the second terminal re-obtains an unoccupied resource for the PRS. Alternatively, the second terminal determines a resource occupation status by using a detection mechanism, and then obtains the resource for the PRS from an unoccupied resource pool.

S403: The second terminal sends the SCI. Correspondingly, the first terminal receives the SCI.

The SCI includes indication information that indicates the resource for the PRS.

For the indication information, refer to related descriptions of the first indication information. Details are not described herein again.

S404: The second terminal sends the PRS. Correspondingly, the first terminal receives the PRS.

S405: The first terminal performs measurement based on the PRS to obtain a measurement result.

For example, the second terminal may perform measurement based on the received PRS, and may obtain information such as time of arrival, an angle of arrival, and an angle of departure through measurement.

S406: The first terminal performs location calculation based on the measurement result.

In this embodiment of this application, the first terminal sends a positioning request, to request the another terminal (including the second terminal) to send the PRS over a sidelink, and further performs measurement based on the received PRS, determine a location of the first terminal. This implements a positioning technology between terminals. In addition, the another terminal (including the second terminal) includes the indication information that indicates the resource for the PRS in the SCI, and sends the information in a broadcast manner, so that a terminal that receives the SCI can determine an occupation status of the resource for the PRS, to avoid a case of sending the PRS by using the same resource. According to the method 400, a positioning service between terminals is implemented without participation of a network device, a measurement error caused by collision of the resource for the PRS is effectively reduced, and accuracy of location measurement is improved.

It should be understood that numbers of the foregoing processes do not mean execution sequences. The execution sequences of the processes need to be determined based on functions and internal logic of the processes, and should not be construed as any limitation on implementation processes of embodiments of this application.

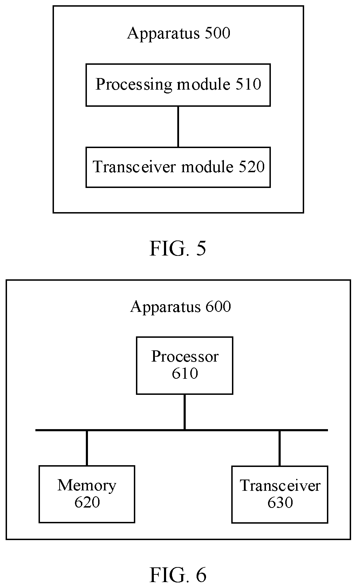

The foregoing describes in detail the PRS sending and receiving method in embodiments of this application with reference to FIG. 2 to FIG. 4. The following describes in detail PRS sending and receiving apparatuses in embodiments of this application with reference to FIG. 5 and FIG. 6.

FIG. 5 shows a PRS sending and receiving apparatus 500 according to an embodiment of this application. As shown in FIG. 5, the apparatuses 500 include a processing module 510 and a transceiver module 520.

In a possible implementation, the apparatuses 500 are a first terminal or a chip in a first terminal.

The processing module 510 is configured to obtain a resource for a positioning reference signal PRS. The transceiver module 620 is configured to send sidelink control information SCI, where the SCI includes first indication information, and the first indication information indicates the resource for the PRS; and send the PRS on the resource for the PRS.

Optionally, the SCI includes first-type SCI and second-type SCI, a resource for the first-type SCI is predefined, the first-type SCI includes second indication information, the second indication information is related to a resource for the second-type SCI, and the second-type SCI includes the first indication information.

Optionally, that the second indication information is related to a resource for the second-type SCI includes: The second indication information indicates the resource for the second-type SCI.

Optionally, the resource for the second-type SCI is a predefined first resource, and that the second indication information is related to a resource for the second-type SCI includes: The second indication information indicates whether to send the second-type SCI on the first resource.

Optionally, the first indication information indicates one or more of the following: whether the resource for the PRS occupies a physical sidelink control channel PSCCH or a physical sidelink shared channel PSSCH, whether the resource is a PRS-dedicated resource, and location information of the resource for the PRS.

Optionally, that an indication indicated by the first indication information for the resource for the PRS includes: at least one of a time domain position and a frequency domain position of the resource for the PRS; or a number or an index of the resource for the PRS, where the number of the resource for the PRS is determined based on a predefined mapping relationship between at least one resource and at least one number or index.

Optionally, the transceiver module 520 is further configured to: receive information about the resource for the PRS configured by a network device; and the processing module 510 is further configured to: obtain the resource for the PRS from a predefined resource pool; or determine, by the first terminal, a predefined resource as the resource for the PRS.

Optionally, the transceiver module 520 is further configured to: receive a measurement result from a second terminal, where the measurement result is obtained by the second terminal based on measurement of the PRS sent by the first terminal; and the processing module 510 is further configured to: perform positioning based on the measurement result.

In an optional example, a person skilled in the art may understand that the apparatuses 500 may be specifically the first terminal in the foregoing embodiments, and the apparatuses 500 may be configured to perform the procedures and/or steps corresponding to the first terminal in the methods 200, the method 300, and the method 400. To avoid repetition, details are not described herein again.

In another possible implementation, the apparatuses 500 are a second terminal or a chip in a second terminal.

The transceiver module 520 is configured to receive sidelink control information SCI, where the SCI includes first indication information, and the first indication information indicates a resource for a positioning reference signal PRS; and receive the PRS on the resource for the PRS.

Optionally, the SCI includes first-type SCI and second-type SCI, a resource for the first-type SCI is predefined, the first-type SCI includes second indication information, the second indication information is related to a resource for the second-type SCI, and the second-type SCI includes the first indication information.

Optionally, that the second indication information is related to a resource for the second-type SCI includes: The second indication information indicates the resource for the second-type SCI.

Optionally, the resource for the second-type SCI is a predefined first resource, and that the second indication information is related to a resource for the second-type SCI includes: The second indication information indicates whether to send the second-type SCI on the first resource.

Optionally, the first indication information indicates one or more of the following: whether the resource for the PRS occupies a PSCCH or a physical sidelink shared channel PSSCH, whether the resource for the PRS is a PRS-dedicated resource, and location information of the resource for the PRS.

Optionally, an indication indicated by the first indication information for the location information of the resource for the PRS includes: at least one of a time domain position and a frequency domain position of the resource for the PRS; or a number or an index of the resource for the PRS, where the number or the index of the resource for the PRS is determined based on a predefined mapping relationship between at least one resource and at least one number or index.

Optionally, the processing module 510 is configured to perform measurement based on the PRS sent by a first terminal to obtain a measurement result; and the transceiver module 520 is further configured to send the measurement result.

Optionally, the processing module 510 is configured to perform measurement based on the PRS sent by a first terminal to obtain a measurement result; and perform positioning based on the measurement result.

In an optional example, a person skilled in the art may understand that the apparatuses 500 may be specifically the second terminal in the foregoing embodiments, and the apparatuses 500 may be configured to perform the procedures and/or steps corresponding to the second terminal in the methods 200, the method 300, and the method 400. To avoid repetition, details are not described herein again.

It should be understood that the apparatuses 500 herein are represented in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. The apparatuses 500 may be configured to perform procedures and/or steps corresponding to the first terminal or the second terminal in the foregoing method embodiments. To avoid repetition, details are not described herein again.

The apparatuses 500 have a function of implementing corresponding steps performed by the first terminal or the second terminal in the methods 200, the method 300, and the method 400. The foregoing function may be implemented by hardware, or may be implemented by hardware by executing corresponding software. The hardware or the software includes one or more modules corresponding to the function.

In this embodiment of this application, the apparatuses 500 in FIG. 5 may alternatively be chips or chip systems, for example, a system on chip (system on chip, SoC). This is not limited in this application.

FIG. 6 shows another PRS sending and receiving apparatus 600 according to an embodiment of this application. The apparatuses 600 include a processor 610, a memory 620, and a transceiver 630. The processor 610, the memory 620, and the transceiver 630 are connected by using an internal connection path, the memory 620 is configured to store instructions, and the processor 610 is configured to execute the instructions stored in the memory 620, so that the apparatuses 600 can perform the PRS sending and receiving method 200, the method 300, and the method 400 that are provided in the foregoing method embodiments.

It should be understood that the function of the apparatuses 500 in the foregoing embodiment may be integrated into the apparatuses 600. The apparatuses 600 may be configured to perform steps and/or procedures corresponding to the first terminal in the foregoing method embodiments, or the apparatuses 600 may be further configured to perform steps and/or procedures corresponding to the second terminal in the foregoing method embodiments. Optionally, the memory 620 may include a read-only memory and a random access memory, and provide instructions and data to the processor. A part of the memory may further include a non-volatile random access memory. For example, the memory may further store information of a device type. The processor 610 may be configured to execute the instructions stored in the memory. When the processor executes the instructions, the processor 610 may perform steps and/or procedures corresponding to the first terminal in the foregoing method embodiments, or the processor 610 may perform steps and/or procedures corresponding to the second terminal in the foregoing method embodiments.

It should be understood that, the processor 610 mentioned in embodiments of this application may be a central processing unit (central processing unit, CPU), and the processor 610 may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The processor 610 may be a microprocessor, or the processor 610 may be any conventional processor or the like.

In an implementation process, the steps in the methods 200, the method 300, and the method 400 may be completed by using an integrated logic circuit of hardware in the processor or instructions in a form of software. The steps of the method disclosed with reference to embodiments of this application may be directly performed by a hardware processor, or may be performed by a combination of hardware and software modules in the processor. A software module may be located in a mature storage medium in the art, such as a random access memory, a flash memory, a read-only memory, a programmable read-only memory, an electrically erasable programmable memory, a register, or the like. The storage medium is located in the memory, and a processor reads the instructions in the memory and completes the steps in the foregoing methods in combination with hardware of the processor. To avoid repetition, details are not described herein again.

An embodiment of this application provides a communication apparatus, including an interface circuit and a logic circuit. The interface circuit is configured to communicate with a module outside the communication apparatus. The logic circuit is configured to execute a computer program, so that the communication apparatus performs a function of any one of the foregoing method embodiments.

This application further provides a computer-readable medium that stores a computer program. When the computer program is executed by a computer, a function of any one of the foregoing method embodiments is implemented.

This application further provides a computer program product. When the computer program product is executed by a computer, a function of any one of the foregoing method embodiments is implemented.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and units, refer to a corresponding process in the foregoing method embodiments, and details are not described herein again.

In the several embodiments provided in this application, it should be understood that the disclosed systems, apparatuses, and methods may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning reference signal sending method, comprising:
obtaining, by a first terminal, a resource for a positioning reference signal PRS;
sending, by the first terminal, sidelink control information SCI, wherein the SCI comprises first indication information, and the first indication information indicates the resource for the PRS; and
sending, by the first terminal, the PRS on the resource for the PRS.

2. The method according to claim 1, wherein the SCI comprises first-type SCI and second-type SCI, a resource for the first-type SCI is predefined, the first-type SCI comprises second indication information, the second indication information is related to a resource for the second-type SCI, and the second-type SCI comprises the first indication information.

3. The method according to claim 2, wherein that the second indication information is related to a resource for the second-type SCI comprises:
the second indication information indicates the resource for the second-type SCI.

4. The method according to claim 2, wherein the resource for the second-type SCI is a predefined first resource, and that the second indication information is related to a resource for the second-type SCI comprises:
the second indication information indicates whether to send the second-type SCI on the first resource.

5. The method according to any one of claims 2 to 4, wherein the first indication information indicates one or more of the following: whether the resource for the PRS occupies a physical sidelink control channel PSCCH or a physical sidelink shared channel PSSCH, whether the resource for the PRS is a PRS-dedicated resource, and location information of the resource for the PRS.

6. The method according to claim 5, wherein an indication indicated by the first indication information for the location information of the resource for the PRS comprises:
at least one of a time domain position and a frequency domain position of the resource for the PRS; or
a number or an index of the resource for the PRS, wherein the number or the index of the resource for the PRS is determined based on a predefined mapping relationship between at least one resource and at least one number or index.

7. The method according to any one of claims 1 to 6, wherein the obtaining, by a first terminal, a resource for a PRS comprises:
receiving, by the first terminal, information about the resource for the PRS configured by a network device; and
determining, by the first terminal, the resource for the PRS in a predefined resource pool; or
determining, by the first terminal, a predefined resource as the resource for the PRS.

8. The method according to any one of claims 1 to 7, wherein the method further comprises:
receiving, by the first terminal, a measurement result from a second terminal, wherein the measurement result is obtained by the second terminal based on measurement of the PRS sent by the first terminal; and
performing, by the first terminal, positioning based on the measurement result.

9. A positioning reference signal receiving method, comprising:
receiving, by a second terminal, sidelink control information SCI, wherein the SCI comprises first indication information, and the first indication information indicates a resource for a positioning reference signal PRS; and
receiving, by the second terminal, the PRS on the resource for the PRS.

10. The method according to claim 9, wherein the SCI comprises first-type SCI and second-type SCI, a resource for the first-type SCI is predefined, the first-type SCI comprises second indication information, the second indication information is related to a resource for the second-type SCI, and the second-type SCI comprises the first indication information.

11. The method according to claim 10, wherein that the second indication information is related to a resource for the second-type SCI comprises:
the second indication information indicates the resource for the second-type SCI.

12. The method according to claim 10, wherein the resource for the second-type SCI is a predefined first resource, and that the second indication information is related to a resource for the second-type SCI comprises:
the second indication information indicates whether to send the second-type SCI on the first resource.

13. The method according to any one of claims 10 to 12, wherein the first indication information indicates one or more of the following: whether the resource for the PRS occupies a physical sidelink control channel PSCCH or a physical sidelink shared channel PSSCH, whether the resource for the PRS is a PRS-dedicated resource, and location information of the resource for the PRS.

14. The method according to claim 13, wherein an indication indicated by the first indication information for the location information of the resource for the PRS comprises:
at least one of a time domain position and a frequency domain position of the resource for the PRS; or
a number or an index of the resource for the PRS, wherein the number or the index of the resource for the PRS is determined based on a predefined mapping relationship between at least one resource and at least one number or index.

15. The method according to any one of claims 9 to 14, wherein the method further comprises:
performing, by the second terminal, measurement based on the PRS sent by a first terminal to obtain a measurement result; and
sending, by the second terminal, the measurement result.

16. The method according to any one of claims 9 to 14, wherein the method further comprises:
performing, by the second terminal, measurement based on the PRS sent by a first terminal to obtain a measurement result; and
performing, by the second terminal, positioning based on the measurement result.

17. A positioning reference signal sending apparatus, comprising:
a processing module, configured to obtain a resource for a positioning reference signal PRS; and
a transceiver module, configured to: send sidelink control information SCI, wherein the SCI comprises first indication information, and the first indication information indicates the resource for the PRS; and send the PRS on the resource for the PRS.

18. The apparatus according to claim 17, wherein the SCI comprises first-type SCI and second-type SCI, a resource for the first-type SCI is predefined, the first-type SCI comprises second indication information, the second indication information is related to a resource for the second-type SCI, and the second-type SCI comprises the first indication information.

19. The apparatus according to claim 18, wherein that the second indication information is related to a resource for the second-type SCI comprises:
the second indication information indicates the resource for the second-type SCI.

20. The apparatus according to claim 18, wherein the resource for the second-type SCI is a predefined first resource, and that the second indication information is related to a resource for the second-type SCI comprises:
the second indication information indicates whether to send the second-type SCI on the first resource.

21. The apparatus according to any one of claims 18 to 20, wherein the first indication information indicates one or more of the following: whether the resource for the PRS occupies a physical sidelink control channel PSCCH or a physical sidelink shared channel PSSCH, whether the resource for the PRS is a PRS-dedicated resource, and location information of the resource for the PRS.

22. The apparatus according to claim 21, wherein an indication indicated by the first indication information for the location information of the resource for the PRS comprises:
at least one of a time domain position and a frequency domain position of the resource for the PRS; or
a number or an index of the resource for the PRS, wherein the number or the index of the resource for the PRS is determined based on a predefined mapping relationship between at least one resource and at least one number or index.

23. The apparatus according to any one of claims 17 to 22, wherein the transceiver module is further configured to:
receive information about the resource for the PRS configured by a network device; and
the processing module is further configured to: determine the resource for the PRS in a predefined resource pool; or determine a predefined resource as the resource for the PRS.

24. The apparatus according to any one of claims 17 to 23, wherein the transceiver module is further configured to:
receive a measurement result from a second terminal, wherein the measurement result is obtained by the second terminal based on measurement of the PRS sent by the apparatus; and
the processing module is further configured to perform positioning based on the measurement result.

25. A positioning reference signal receiving apparatus, comprising:
a transceiver module, configured to receive sidelink control information SCI, wherein the SCI comprises first indication information, and the first indication information indicates a resource for a positioning reference signal PRS, wherein
the transceiver module is further configured to receive the PRS on the resource for the PRS.

26. The apparatus according to claim 25, wherein the SCI comprises first-type SCI and second-type SCI, a resource for the first-type SCI is predefined, the first-type SCI comprises second indication information, the second indication information is related to a resource for the second-type SCI, and the second-type SCI comprises the first indication information.

27. The apparatus according to claim 26, wherein that the second indication information is related to a resource for the second-type SCI comprises:
the second indication information indicates the resource for the second-type SCI.

28. The apparatus according to claim 26, wherein the resource for the second-type SCI is a predefined first resource, and that the second indication information is related to a resource for the second-type SCI comprises:
the second indication information indicates whether to send the second-type SCI on the first resource.

29. The apparatus according to any one of claims 26 to 28, wherein the first indication information indicates one or more of the following: whether the resource for the PRS occupies a physical sidelink control channel PSCCH or a physical sidelink shared channel PSSCH, whether the resource for the PRS is a PRS-dedicated resource, and location information of the resource for the PRS.

30. The apparatus according to claim 29, wherein an indication indicated by the first indication information for the location information of the resource for the PRS comprises:
at least one of a time domain position and a frequency domain position of the resource for the PRS; or
a number or an index of the resource for the PRS, wherein the number or the index of the resource for the PRS is determined based on a predefined mapping relationship between at least one resource and at least one number or index.

31. The apparatus according to any one of claims 25 to 30, wherein the apparatus further comprises:
a processing module, configured to perform measurement based on the PRS sent by a first terminal to obtain a measurement result, wherein
the transceiver module is further configured to send the measurement result.

32. The apparatus according to any one of claims 25 to 30, wherein the apparatus further comprises:
a processing module, configured to perform measurement based on the PRS sent by a first terminal to obtain a measurement result; and
perform positioning based on the measurement result.

33. A communication apparatus, comprising a processor and a memory, wherein the processor is coupled to the memory, the memory is configured to store instructions, and when the instructions are executed by the processor, the apparatus is enabled to perform the method according to any one of claims 1 to 8, or the apparatus is enabled to perform the method according to any one of claims 9 to 16.

34. A communication apparatus, comprising an interface circuit and a logic circuit, wherein
the interface circuit is configured to communicate with a module outside the communication apparatus; and
the logic circuit is configured to execute a computer program, to enable the communication apparatus to perform the method according to any one of claims 1 to 8, or enable the communication apparatus to perform the method according to any one of claims 9 to 16.

35. A computer-readable storage medium, configured to store instructions, wherein when the instructions are executed, a computer is enabled to perform the method according to any one of claims 1 to 8, or a computer is enabled to perform the method according to any one of claims 9 to 16.

36. A computer program product, wherein the computer program product comprises computer program code, and when the computer program code is run on a computer, the computer is enabled to implement the method according to any one of claims 1 to 8, or the computer is enabled to implement the method according to any one of claims 9 to 16.
